# EUROPÄISCHE PATENTSCHRIFT

(11) **EP 1 535 867 B1**
(45) Veröffentlichungstag und Bekanntmachung des Hinweises auf die Patenterteilung: **08.08.2007**
(21) Anmeldenummer: 04019870.7
(22) Anmeldetag: 21.08.2004
(51) Int. Cl.: B65G 47/82, B65G 25/10

(54) **Transportvorrichtung und -verfahren für Tabakballen und -gebinde**
Feed apparatus and method for bales and bundles of tobacco
Dispositif et procédé d'avance pour des balles ou des bottes de tabac

(30) Priorität: 25.11.2003 DE 10355391
(43) Veröffentlichungstag der Anmeldung: 01.06.2005
(73) Patentinhaber: Hauni Primary GmbH, 21493 Schwarzenbek (DE)
(72) Erfinder: Denker, Wolfgang, 21039 Hamburg (DE); Brückner, Dietmar, 22303 Hamburg (DE); Dierken, Hans, 21385 Amelinghausen (DE); Höfig, Rolf, 31737 Rinteln (DE)
(74) Vertreter: Wenzel & Kalkoff

(56) Entgegenhaltungen:
- US-A- 4 573 484
- US-A- 5 449 061
- US-A1- 2003 183 486

## Beschreibung

Die vorliegende Erfindung betrifft eine Vorrichtung gemäss dem Oberbegriff des Anspruchs 1 oder 2 und ein Verfahren gemäss dem Oberbegriff des Anspruchs 11 oder 12 zum Transport mehrere Tabakblattlagen aufweisender Tabakballen und zum Transport von Tabakgebinden, wie zum Beispiel Kartons, Kisten, Containern und anderen Behältern von einer vorgeschalteten zu einer nachgeschalteten Vorrichtung, beispielsweise von einer Tabakballenaufnahmestation zu einer Entschichtungsstation zum Entschichten mehrere Tabakblattlagen aufweisender Tabakballen oder zu einer Slicestation zum Slicen mehrere Tabakblattlagen aufweisender Tabakballen.

In der tabakverarbeitenden Industrie wird Tabak regelmäßig in aus trockenen und zusammengepressten Tabakblättern bestehenden Tabakballen angeliefert. Um die in diesen Tabakballen zusammengepressten Tabakblätter weiter verarbeiten zu können, müssen diese Tabakballen, bevorzugt in ihre einzelnen Tabakblätter, vereinzelt werden. Hierzu müssen die einzelnen Tabakblätter voneinander getrennt bzw. der Tabakballen entschichtet werden. Das geschieht bevorzugt parallel zu den Ebenen der Tabakblattlagen in den Tabakballen. Auf diese Weise ist es möglich, mit Hilfe der einzelnen Tabakblätter eine Löseeinrichtung für den Tabak gleichmäßig mit Tabak zu beschicken. Daneben besteht die Möglichkeit den Tabakballen im wesentlichen quer zu den Ebenen aus Tabakblättern zu Slicen und die Löseeinrichtung mit geslicetem Tabak gleichmäßig zu beschicken.

In der tabakverarbeitenden Industrie werden ferner eine Vielzahl von Tabakgebinden, wie zum Beispiel Kartons, Kisten, Container, Schragen und andere Behälter, von einer Vorrichtung zu einer nachgeschalteten Vorrichtung transportiert.

Aus der EP 03017071.6 (Anmeldenummer) ist eine Vorrichtung zum Transport mehrere Tabakblattlagen aufweisender Tabakballen entlang einer einen Boden aufweisenden Transportstrecke von einer vorgeschalteten Tabakballenaufnahmestation zu einer Entschichtungsstation mit einem ersten Schieber und einem zweiten Schieber zum Schieben eines Tabakballens relativ zu dem Boden sowie einer zwischen die beiden Schieber an eine Übergabeposition geschalteten Fixiereinheit bekannt. Beide Schieber umfassen jeweils ein ein- und ausschwenkbares Schiebeplattenpaar und sind jeweils über einen Schlitten in einer gemeinsamen Führung, welche zwei Führungsschienen umfasst und sich in Transportrichtung über die Übergabeposition hinweg erstreckt, geführt. Der erste Schieber schiebt den Tabakballen entlang der Transportstrecke in die Übergabeposition bis zu der Fixiereinheit, welche den Tabakballen in der Übergabeposition kurzzeitig fixiert. Aus dieser Übergabeposition übernimmt der zweite Schieber den Tabakballen und schiebt ihn entlang der Transportstrecke zu der Entschichtungsstation. Hierbei wird ein Tabakballen über einen ersten Teilabschnitt der Transportstrecke von einem ersten Schieber und über einen zweiten Teilabschnitt der Transportstrecke von einem zweiten Schieber abschnittsweise transportiert, so dass an dem Transport eines Tabakballens entlang seiner Transportstrecke von einem Aufgabeende bis zu einem Abgabeende stets zwei Schieber beteiligt sind.

Eine Vorrichtung zum Transport von Gegenständen mit den Merkmalen des Oberbegriffs des Anspruchs 1 ist bereits aus US-A-5 449 061 bekannt.

Aufgabe der vorliegenden Erfindung ist es, gegenüber der bekannten Vorrichtung bzw. zu dem bekannten Verfahren eine alternative Vorrichtung und ein alternatives Verfahren zum Transport mehrere Tabakblattlagen aufweisender Tabakballen und zum Transport von Tabakgebinden anzugeben.

Diese Aufgabe wird durch die Vorrichtungen mit den Merkmalen der Ansprüche 1, 2 bzw. die Verfahren mit den Merkmalen der Ansprüche 11, 12 gelöst.

Die vorgeschlagenen Vorrichtungen und die vorgeschlagenen Verfahren ermöglichen einen entlang der Transportstrecke kontinuierlichen Transport aufeinander folgender Tabakballen und aufeinander folgender Tabakgebinde. Eine Übergabe bzw. Übernahme des Tabakballens entlang der Transportstrecke von dem ersten Schieber an den zweiten Schieber kann somit entfallen. So kann auch bei Ausfall eines Schiebers der jeweils andere Schieber immer noch einen Transport gewährleisten. Weitere Ausgestaltungen der Erfindung sind den Unteransprüchen sowie der nachfolgenden Beschreibung von Ausführungsbeispielen der Erfindung zu entnehmen.

Die Erfindung wird nachstehend anhand von Ausführungsbeispielen einer Vorrichtung zum Transport von Tabakballen näher erläutert.
- Fig. 1: zeigt eine schematische Ansicht einer Vorrichtung zum Transport von Tabakballen mit einer ersten Ausführungsform von Schiebern.
- Fig. 2: zeigt eine Aufsicht auf die Vorrichtung von Fig. 1.
- Fig. 3: zeigt eine schematische Ansicht einer Vorrichtung zum Transport von Tabakballen mit einer zweiten Ausführungsform von Schiebern.
- Fig. 4: zeigt eine schematische Ansicht einer Vorrichtung zum Transport von Tabakballen mit einer dritten Ausführungsform von Schiebern.
- Fig. 5: zeigt eine schematische Ansicht einer Vorrichtung zum Transport von Tabakballen mit einer vierten Ausführungsform von Schiebern.
- Fig. 6: zeigt eine schematische Ansicht einer Vorrichtung zum Transport von Tabakballen mit einer fünften Ausführungsform von Schiebern.

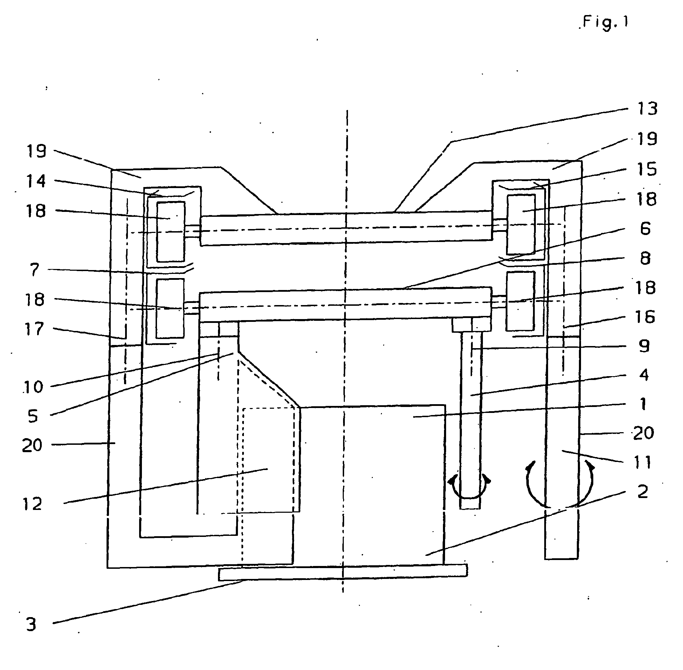

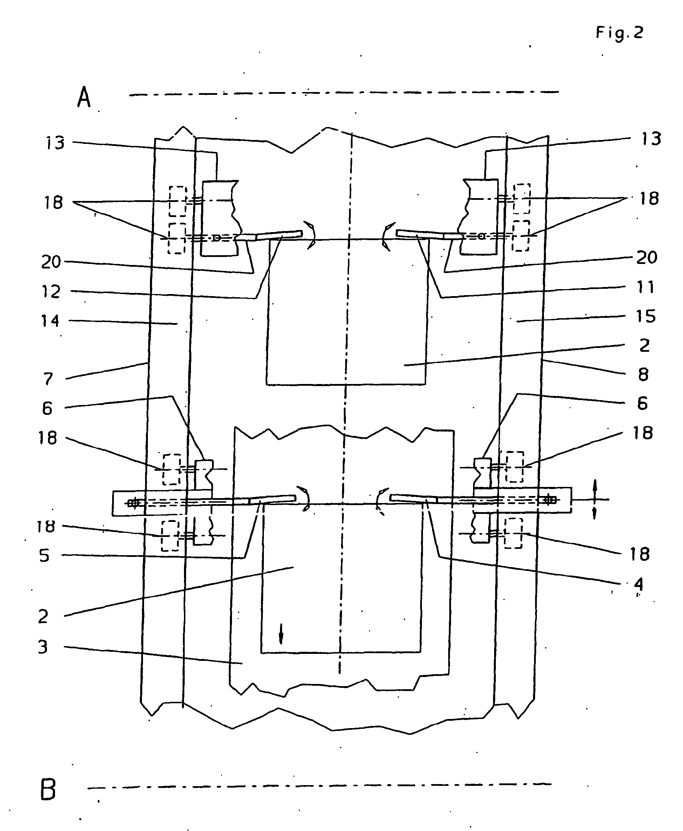

Die in Fig. 1 in einer schematischen Ansicht quer zur Transportrichtung und in Fig. 2 in einer Aufsicht dargestellte Vorrichtung zum Transport mehrere Tabakblattlagen 1 aufweisender Tabakballen 2 umfasst einen Boden 3 zur Aufnahme der Tabakballen 2, einen durch zwei Schiebeplatten 4, 5 ausgebildeten ersten Schieber. Der Boden 3 ist durch rostartig angeordnete Schienen ausgebildet. Die Schiebeplatten 4, 5 sind einander quer zur Transportrichtung beabstandet an einem ersten Schlitten 6 befestigt. Der erste Schlitten 6 ist in einer durch ein Schienenpaar 7, 8 ausgebildeten ersten Führung in Transportrichtung hin- und her bewegbar geführt. Die Schiebeplatten 4, 5 sind in dem ersten Schlitten 6 jeweils um Schwenkachse 9, 10 ein- und ausschwenkbar aufgenommen.

Die Vorrichtung umfasst ferner einen durch zwei Schiebeplatten 11, 12 ausgebildeten zweiten Schieber. Die Schiebeplatten 11, 12 sind einander quer zur Transportrichtung beabstandet an einem zweiten Schlitten 13 befestigt. Der zweite Schlitten 13 ist in einer durch ein Schienenpaar 14, 15 ausgebildeten zweiten Führung in Transportrichtung hinund her bewegbar geführt. Die Schiebeplatten 11, 12 sind in dem zweiten Schlitten 13 jeweils um Schwenkachse 16, 17 ein- und ausschwenkbar aufgenommen.

Die von dem Schienenpaar 7, 8 ausgebildete, erste Führung und die von dem Schienenpaar 14, 15 ausgebildete, zweite Führung sind quer zur Transportrichtung einander beabstandet über dem Boden 3 und in Transportrichtung parallel benachbart angeordnet.

Die Schlitten 6, 13 sind über Rollen 18 in den Schienenpaaren 7, 8, 14, 15 verfahrbar aufgenommen.

Der zweite Schlitten 13 bildet zwei den ersten Schlitten 6 lateral übergreifende und in Bodenrichtung abgewinkelte Arme 19 aus, welche die mit abgewinkelten Armen 20 versehenen Schiebeplatten 11, 12 tragen.

Die Schlitten 6, 13 sind mittels nicht dargestellter Motoren in als auch entgegen der Transportrichtung verfahrbar vorgesehen. Die Schiebeplatten 4, 5, 11, 12 sind mittels nicht dargestellter Verstellelemente um ihre jeweiligen Schwenkachsen schwenkbar vorgesehen.

Der Abstand der Schwenkachsen 9, 10 des ersten Schiebers 4, 5 ist quer zur Transportrichtung geringer als der Abstand der Schwenkachsen 16, 17 des zweiten Schiebers 11, 12, so dass der zweite Schlitten 13 an dem ersten Schlitten 6 vorbeigefahren werden kann, wenn die Schieber 11 und 12 in Ruheposition geschwenkt sind.

In Fig. 1 sind die Schiebeplatten 5 und 12 in der linken Hälfte in eingeschwenkter Arbeitsposition und die Schiebeplatten 4 und 11 in der rechten Hälfte in Ruheposition dargestellt. Beim Transport sind die Schiebeplatten 4, 5 und/oder die Schiebeplatten 11 und 12 jedoch paarweise eingeschwenkt, wie in Fig. 2 dargestellt.

Um die Tabakballen 2 entlang einer Transportstrecke A, B mit einem Aufgabeende A und einem Abgabeende B (vgl. Fig. 2) zu transportieren werden diese auf den sich entlang der Transportstrecke A, B erstreckenden Boden 3 nacheinander aufgegeben und von dem Aufgabeende A zu dem Abgabeende B der Transportstrecke A, B mit Schiebern 4, 5, 11, 12 transportiert. Hierbei wird ein erster Tabakballen 2 am Aufgabeende A aufgegebenen und der erste Schieber 4, 5 zum Aufgabeende A verfahren, welcher den ersten Tabakballen 2 nach einem Einschwenken der Schiebplatten 4, 5 hintergreift und relativ zu dem Boden 3 entlang der Transportstrecke A, B bis zu dem Abgabeende B schiebt. Wird ein zweiter Tabakballen 2 am Aufgabeende A aufgegeben, so wird der zweite Schieber 11, 12 an dem, den ersten Tabakballen 2 schiebenden ersten Schieber 4, 5 vorbei zu dem Aufgabeende A entgegen der Transportrichtung verfahren. Der zweite Schieber 11, 12 hintergreift mittels Einschwenken der Schiebeplatten 11, 12 den zweiten Tabakballen und schiebt ihn relativ zu dem Boden 3 entlang der Transportstrecke A, B bis zu dem Abgabeende B, während der erste Schieber 4, 5 entgegen der Transportrichtung zu dem Aufgabeende A, an dem den zweiten Tabakballen 2 schiebenden zweiten Schieber 11, 12 vorbei, mit in Ruheposition zurückgeschwenkten Schiebplatten 4, 5, zurück verfahren wird. Analog kann auch der zweite Schieber 11, 12 an dem ersten Schieber 4, 5 vorbei zurück verfahren werden, um einen weiteren Tabakballen zu transportieren.

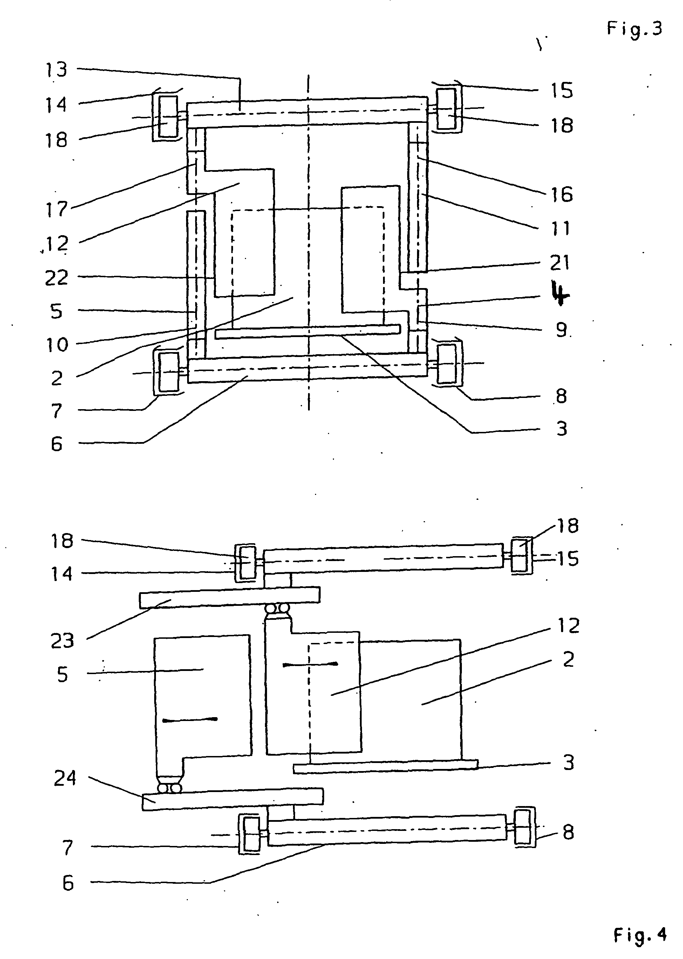

Bei der in Fig. 3 dargestellten Ausführungsform von Schiebern 4, 5, 11, 12 ist eine erste Führung 7, 8 unterhalb des Bodens 3 und eine zweite Führung 14, 15 oberhalb des Bodens 3 angeordnet. Die Schwenkachsen 9, 10 des ersten Schiebers 4, 5 und die Schwenkachsen 16, 17 des zweiten Schiebers 11, 12 sind in Transportrichtung fluchtend angeordnet, so dass zum einen Schwenkachse 9 mit Schwenkachse 16 und zum anderen Schwenkachse 10 mit Schwenkachse 17 fluchtet. Jede Schiebeplatte 4, 5, 11, 12 weist eine Ausnehmung 21, 22 auf. Die Ausnehmungen 21 und 22 korrespondieren zu der Querschnittsfläche des jeweils anderen Schiebers 4, 5, 11, 12 in dessen Ruheposition, um ein zuverlässiges und kollisionsfreies Vorbeifahren zu gewährleisten. Sie entsprechen bevorzugt 100 bis 250 %, besonders bevorzugt 120 bis 200 % der vorgenannten Querschnittsfläche. Die Ausnehmungen 21 der Schiebeplatten 4, 5 und die Ausnehmungen 22 der Schiebeplatten 11, 12 sind paarweise spiegelsymmetrisch. In Fig. 3 sind die Schiebeplatten 4 und 12 in eingeschwenktem und die Schiebeplatten 5 und 11 in Ruheposition dargestellt, was von der paarweise gleichen Arbeitsposition abweicht.

Fig. 4 zeigt eine weitere Ausführungsform von Schiebern 5, 12 in welcher die Schieber 4, 11 nicht dargestellt sind, da diese entsprechend punktsymmetrisch ausgebildet sind. Die Schieber 5, 12 sind hier translatorisch ein- und ausfahrbar an dem jeweiligen Schlitten 6, 13 befestigt. Zum translatorischen Ein- und Ausfahren sind Verstellelemente 23, 24 vorgesehen.

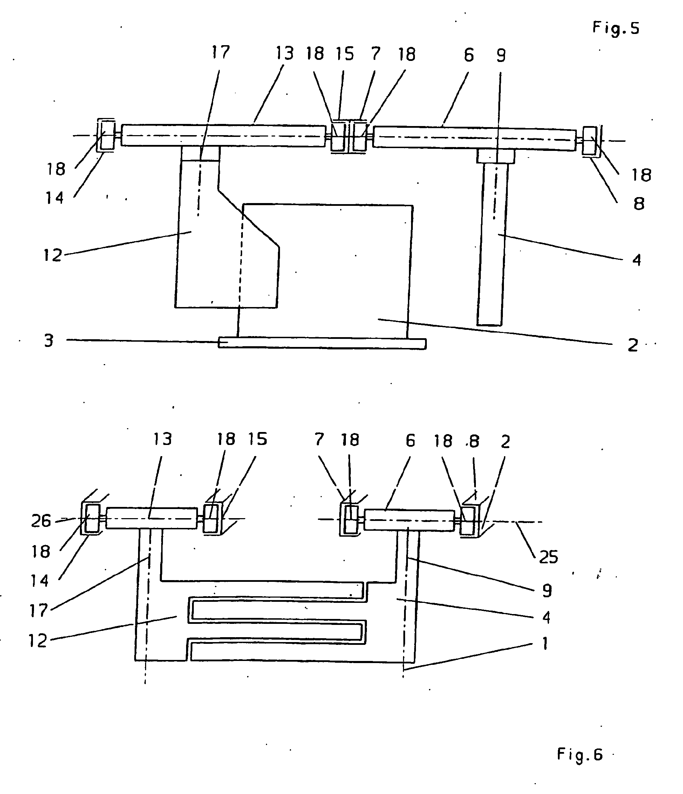

Fig. 5 zeigt eine weitere Ausführungsform von Schiebern 4, 12, welche schwenkbar um die Schwenkachsen 9 und 17 vorgesehen sind. Bei dieser Ausführungsform umfasst der erste Schieber eine einzelne Schiebeplatte 4 und der zweite Schieber eine einzelne Schiebeplatte 12. Die erste Führung 7, 8 und die zweite Führung 14, 15 sind in einer gemeinsamen Ebene über dem Boden 3 angeordnet, wodurch sich vorteilhaft Verschmutzungen in den Führungen vermeiden lassen.

Fig. 6 zeigt eine weitere Ausführungsform von Schiebern 4, 12, bei welcher wiederum die erste Führung 7, 8 und die zweite Führung 14, 15 in einer gemeinsamen Ebene über dem Boden 3 angeordnet sind. Darüber hinaus sind die Schiebeplatten 4, 12 zahnartig ineinandergreifend ausgebildet, um eine weitgehend geschlossene Anlagefläche für den Tabakballen zu bilden. In Abwandlung zu den vorgenannten Ausführungsformen ist hier alternativ ein horizontale Schwenkmöglichkeit der Schiebeplatten 4 und 12 um die horizontal angeordneten Schwenkachsen 25 und 26 vorgesehen, sofern auf ein vertikales Schwenken verzichtet werden soll.

## Patentansprüche

1. Vorrichtung zum Transport mehrere Tabakblattlagen (1) aufweisender Tabakballen (2), mit einem Boden (3) zur Aufnahme der Tabakballen (2), einem ersten Schieber, welcher an einem ersten Schlitten (6) befestigt ist, wobei der erste Schlitten (6) in einer ersten Führung in Transportrichtung hin und her bewegbar geführt ist, und einem zweiten Schieber, welcher an einem zweiten Schlitten (13) befestigt ist, wobei der zweite Schlitten (13) in Transportrichtung in einer zweiten Führung hin und her bewegbar geführt ist, **dadurch gekennzeichnet , dass** die erste Führung für den ersten Schlitten (6) aus einem Schienenpaar (7, 8) und die zweite Führung für den zweiten Schlitten (13) aus einem Schienenpaar (14, 15) gebildet ist und die Schienenpaare (7, 8; 14, 15) quer zur Transportrichtung einander beabstandet und in Transportrichtung durchgängig parallel benachbart angeordnet sind, und Schiebeplatten (4, 5) des ersten Schiebers und Schiebeplatten (11, 12) des zweiten Schiebers jeweils um eine senkrecht zur Transportrichtung der Schlitten (6, 13) verlaufende Schwenkachse (9, 10, bzw. 16, 17) bewegbar sind.

2. Vorrichtung zum Transport mehrere Tabakblattlagen (1) aufweisender Tabakballen (2), mit einem Boden (3) zur Aufnahme der Tabakballen (2), einem ersten Schieber, welcher an einem ersten Schlitten (6) befestigt ist, wobei der erste Schlitten (6) in einer ersten Führung in Transportrichtung hin und her bewegbar geführt ist, und einem zweiten Schieber, welcher an einem zweiten Schlitten (13) befestigt ist, wobei der zweite Schlitten (13) in Transportrichtung in einer zweiten Führung hin und her bewegbar geführt ist, **dadurch gekennzeichnet, dass** die erste Führung für den ersten Schlitten (6) aus einem Schienenpaar (7, 8) und die zweite Führung für den zweiten Schlitten (13) aus einem Schienenpaar (14, 15) gebildet ist und die Schienenpaare (7, 8; 14, 15) quer zur Transportrichtung einander beabstandet und in Transportrichtung durchgängig parallel benachbart angeordnet sind, und Schiebeplatten (4, 5) des ersten Schiebers und Schiebeplatten (11, 12) des zweiten Schiebers jeweils translatorisch ein- und ausfahrbar an dem jeweiligen Schlitten (6, 13) befestigt sind.

3. Vorrichtung nach Anspruch 1 oder 2, **dadurch gekennzeichnet, dass** mindestens eine Schiebeplatte (4, 5, 11, 12) aus einer Ruheposition in eine Arbeitsposition hin und her bewegbar ausgebildet ist.

4. Vorrichtung nach einem der Ansprüche 1 bis 3, **dadurch gekennzeichnet, dass** die erste Führung und die zweite Führung über oder unter dem Boden (3) angeordnet sind.

5. Vorrichtung nach einem der Ansprüche 1 bis 4, **dadurch gekennzeichnet, dass** die erste Führung (7, 8) und die zweite Führung (14, 15) in einer gemeinsamen Ebene über oder unter dem Boden (3) angeordnet sind.

6. Vorrichtung nach einem der Ansprüche 1 bis 3, **dadurch gekennzeichnet, dass** die erste Führung über dem Boden (3) und die zweite Führung unter dem Boden (3) angeordnet sind.

7. Vorrichtung nach Anspruch 1, **dadurch gekennzeichnet, dass** die Schwenkachse (9, 10) des ersten Schiehers und die Schwenkachse (16, 17) des zweiten Schiebers in Transportrichtung fluchtend angeordnet sind und jede Schieberplatte (4, 5, 11, 12) eine Ausnehmung (21, 22) aufweist, welche in etwa, bevorzugt 100 bis 250 %, besonders bevorzugt 120 bis 200 %, der Querschnittsfläche der jeweils anderen Schieberplatte (4, 5,11,12) in Ruheposition entspricht.

8. Vorrichtung nach Anspruch 1 oder 7, **dadurch gekennzeichnet, dass** der Abstand der Schwenkachsen (9, 10) der ersten Schiebeplatten (4, 5) quer zur Transportrichtung geringer ist als der Abstand der Schwenkachsen (16, 17) der zweiten Schiebeplatten (11, 12).

9. Vorrichtung nach einem der Ansprüche 1 bis 8, **dadurch gekennzeichnet, dass** der Boden (3) durch ein Förderband ausgebildet ist.

10. Vorrichtung nach einem der Ansprüche 1 bis 9, **dadurch gekennzeichnet, dass** der Boden (3) in Transportrichtung ansteigend angeordnet ist, bevorzugt mit einer Steigung von 1 bis 20 Grad, besonders bevorzugt 3 bis 15 Grad.

11. Verfahren zum Transport von zwei aufeinander folgenden, mehrere Tabakblattlagen (1) aufweisenden Tabakballen (2) entlang einer Transportstrecke (A, B) mit einem Aufgabeende (A) und einem Abgabeende (B), bei welchem die Tabakballen (2) am Aufgabeende (A) der Transportstrecke (A, B) auf einen sich entlang der Transportstrecke (A, B) erstreckenden Boden (3) nacheinander aufgegeben und von dem Aufgabeende (A) zu dem Abgabeende (B) der Transportstrecke (A, B) transportiert werden, wobei die Tabakballen (2) mittels eines ersten Schiebers, welcher an einem ersten Schlitten (6) befestigt ist, und eines zweiten Schiebers, welcher an einem zweiten Schlitten (13) befestigt ist, bewegt werden und die Schlitten (6, 13) in entsprechenden ersten und zweiten Führungen geführt werden, **dadurch gekennzeichnet, dass** ein erster Tabakballen (2) am Aufgabeende (A) aufgegebenen wird, Schiebeplatten (4, 5) des ersten Schiebers zum Aufgabeende (A) verfahren werden und den ersten Tabakballen (2) hintergreifen und relativ zu dem Boden (3) entlang der Transportstrecke (A, B) bis zu dem Abgabeende (B) schieben, ein zweiter Tabakballen (2) am Aufgabeende (A) aufgegeben wird und Schiebeplatten (11, 12) des zweiten Schiebers an den den ersten Tabakballen (2) schiebenden ersten Schiebeplatten (4, 5) vorbei zu dem Aufgabeende (A) entgegen der Transportrichtung verfahren werden, den zweiten Tabakballen (2) hintergreifen und relativ zu dem Boden (3) entlang der Transportstrecke (A, B) bis zu dem Abgabeende (B) schieben, während die Schiebeplatten (4, 5) des ersten Schiebers entgegen der Transportrichtung zu dem Aufgabeende (A), an den den zweiten Tabakballen (2) schiebenden Schiebeplatten (11, 12) des zweiten Schiebers vorbei, zurück verfahren werden, wobei die Schlitten (6, 13) durchgängig parallel benachbart zueinander jeweils entlang eines Schienenpaares (7, 8 bzw. 14, 15) verfahren werden und die den Schlitten (6, 13) zugeordneten Schiebeplatten (4, 5; 11, 12) zum Hintergreifen der Tabakballen (2) und zum Einnehmen einer Ruheposition um vertikale Schwenkachsen (9, 10 bzw. 16, 17) ein- und ausgeschwenkt werden.

12. Verfahren zum Transport von zwei aufeinander folgenden, mehrere Tabakblattlagen (1) aufweisenden Tabakballen (2) entlang einer Transportstrecke (A, B) mit einem Aufgabeende (A) und einem Abgabeende (B), bei welchem die Tabakballen (2) am Aufgabeende (A) der Transportstrecke (A, B) auf einen sich entlang der Transportstrecke (A, B) erstreckenden Boden (3) nacheinander aufgegeben und von dem Aufgabeende (A) zu dem Abgabeende (B) der Transportstrecke (A, B) transportiert werden, wobei die Tabakballen (2) mittels eines ersten Schiebers, welcher an einem ersten Schlitten befestigt ist, und eines zweiten Schiebers, welcher an einem zweiten Schlitten befestigt ist, bewegt werden und die Schlitten in entsprechenden ersten und zweiten Führungen geführt werden, **dadurch gekennzeichnet, dass** ein erster Tabakballen (2) am Aufgabeende (A) aufgegebenen wird, Schiebeplatten (4, 5) des ersten Schiebers zum Aufgabeende (A) verfahren werden und den ersten Tabakballen (2) hintergreifen und relativ zu dem Boden (3) entlang der Transportstrecke (A, B) bis zu dem Abgabeende (B) schieben, ein zweiter Tabakballen (2) am Aufgabeende (A) aufgegeben wird und Schiebeplatten (11, 12) des zweiten Schiebers an den den ersten Tabakballen (2) schiebenden ersten Schiebeplatten (4, 5) vorbei zu dem Aufgabeende (A) entgegen der Transportrichtung verfahren werden, den zweiten Tabakballen (2) hintergreifen und relativ zu dem Boden (3) entlang der Transportstrecke (A, B) bis zu dem Abgabeende (B) schieben, während die Schiebeplatten (4, 5) des ersten Schiebers entgegen der Transportrichtung zu dem Aufgabeende (A), an den den zweiten Tabakballen (2) schiebenden Schiebeplatten (11, 12) des zweiten Schiebers vorbei, zurück verfahren werden, wobei die Schlitten (6, 13) durchgängig parallel benachbart zueinander jeweils entlang eines Schienenpaares (7, 8 bzw. 14, 15) verfahren werden und die den Schlitten (6, 13) zugeordneten Schiebeplatten (4, 5, 11, 12) zum Hintergreifen der Tabakballen (2) und zum Einnehmen einer Ruheposition translatorisch einwärts und auswärts verfahren werden.

13. Verfahren nach Anspruch 11 oder 12, **dadurch gekennzeichnet, dass** sich die Schiebeplatten (4, 5, 11, 12) jeweils in der Ruheposition befinden, während sie entgegen der Transportrichtung zu dem Aufgabeende (A) zurück verfahren werden.

14. Verfahren nach einem der Ansprüche 11 bis 13, **dadurch gekennzeichnet, dass** die Schlitten (6, 13) einzeln mittels Motoren angetrieben und verfahren werden.

## Claims

1. Device for conveying tobacco bales (2) consisting of a plurality of tobacco leaf layers (1), having a base (3) for receiving the tobacco bales (2), a first pusher, which is fastened to a first slide (6), wherein the first slide (6) is guided reciprocably in conveying direction in a first guide, and a second pusher, which is fastened to a second slide (13), wherein the second slide (13) is guided reciprocably in conveying direction in a second guide,
**characterized in that** the first guide for the first slide (6) is formed by a rail pair (7, 8) and the second guide for the second slide (13) is formed by a rail pair (14, 15) and the rail pairs (7, 8; 14, 15) are disposed mutually spaced apart transversely of the conveying direction and uniformly parallel and adjacent to one another in conveying direction, and pushing plates (4, 5) of the first pusher and pushing plates (11, 12) of the second pusher are movable in each case about a swivelling axis (9, 10 and/or 16, 17) extending at right angles to the conveying direction of the slides (6, 13).

2. Device for conveying tobacco bales (2) consisting of a plurality of tobacco leaf layers (1), having a base (3) for receiving the tobacco bales (2), a first pusher, which is fastened to a first slide (6), wherein the first slide (6) is guided reciprocably in conveying direction in a first guide, and a second pusher, which is fastened to a second slide (13), wherein the second slide (13) is guided reciprocably in conveying direction in a second guide,
**characterized in that** the first guide for the first slide (6) is formed by a rail pair (7, 8) and the second guide for the second slide (13) is formed by a rail pair (14, 15) and the rail pairs (7, 8; 14, 15) are disposed mutually spaced apart transversely of the conveying direction and uniformly parallel and adjacent to one another in conveying direction, and pushing plates (4, 5) of the first pusher and pushing plates (11, 12) of the second pusher are fastened to the respective slide (6, 13) in each case so as to be capable of inward and outward linear motion.

3. Device according to claim 1 or 2, **characterized in that** at least one pushing plate (4, 5, 11, 12) is designed to be movable back and forth from a normal position into an operating position.

4. Device according to one of claims 1 to 3, **characterized in that** the first guide and the second guide are disposed above or below the base (3).

5. Device according to one of claims 1 to 4, **characterized in that** the first guide (7, 8) and the second guide (14, 15) are disposed in a common plane above or below the base (3).

6. Device according to one of claims 1 to 3, **characterized in that** the first guide is disposed above the base (3) and the second guide is disposed below the base (3).

7. Device according to claim 1, **characterized in that** the swivelling axis (9, 10) of the first pusher and the swivelling axis (16, 17) of the second pusher are disposed aligned in conveying direction and each pushing plate (4, 5, 11, 12) has a recess (21, 22) that corresponds approximately, in a preferred manner to 100 to 250%, in a particularly preferred manner to 120 to 200%, of the cross-sectional area of the respective other pushing plate (4, 5, 11, 12) in normal position.

8. Device according to claim 1 or 7, **characterized in that** the distance between the swivelling axes (9, 10) of the first pushing plates (4, 5) transversely of the conveying direction is smaller than the distance between the swivelling axes (16, 17) of the second pushing plates (11, 12).

9. Device according to one of claims 1 to 8, **characterized in that** the base (3) is formed by a conveyor belt.

10. Device according to one of claims 1 to 9, **characterized in that** the base (3) is arranged so as to ascend in conveying direction, in a preferred manner with an ascending gradient of 1 to 20 degrees, in a particularly preferred manner 3 to 15 degrees.

11. Method of conveying two successive tobacco bales (2) consisting of a plurality of tobacco leaf layers (1) along a conveying section (A, B) having a charging end (A) and a discharge end (B), whereby the tobacco bales (2) at the charging end (A) of the conveying section (A, B) are loaded successively onto a base (3) extending along the conveying section (A, B) and are conveyed from the charging end (A) to the discharge end (B) of the conveying section (A, B), wherein the tobacco bales (2) are moved by means of a first pusher, which is fastened to a first slide (6), and a second pusher, which is fastened to a second slide (13), and the slides (6, 13) are guided in corresponding first and second guides, **characterized in that** a first tobacco bale (2) is loaded at the charging end (A), pushing plates (4, 5) of the first pusher are moved to the charging end (A) and engage behind the first tobacco bale (2) and push it relative to the base (3) along the conveying section (A, B) to the discharge end (B), a second tobacco bale (2) is loaded at the charging end (A) and pushing plates (11, 12) of the second pusher are moved counter to the conveying direction past the first pushing plates (4, 5) pushing the first tobacco bale (2) and up to the charging end (A), engage behind the second tobacco bale (2) and push it relative to the base (3) along the conveying section (A, B) to the discharge end (B), while the pushing plates (4, 5) of the first pusher are moved counter to the conveying direction past the pushing plates (11, 12) of the second pusher pushing the second tobacco bale (2) and back to the charging end (A), wherein the slides (6, 13) are moved uniformly parallel and adjacent to one another in each case along a rail pair (7, 8 and/or 14, 15) and the pushing plates (4, 5; 11, 12) associated with the slides (6, 13), in order to engage behind the tobacco bales (2) and in order to adopt a normal position, are swivelled inwards and outwards about vertical swivelling axes (9, 10 and/or 16, 17) .

12. Method of conveying two successive tobacco bales (2) consisting of a plurality of tobacco leaf layers (1) along a conveying section (A, B) having a charging end (A) and a discharge end (B), whereby the tobacco bales (2) at the charging end (A) of the conveying section (A, B) are loaded successively onto a base (3) extending along the conveying section (A, B) and are conveyed from the charging end (A) to the discharge end (B) of the conveying section (A, B), wherein the tobacco bales (2) are moved by means of a first pusher, which is fastened to a first slide, and a second pusher, which is fastened to a second slide, and the slides are guided in corresponding first and second guides, **characterized in that** a first tobacco bale (2) is loaded at the charging end (A), pushing plates (4, 5) of the first pusher are moved to the charging end (A) and engage behind the first tobacco bale (2) and push it relative to the base (3) along the conveying section (A, B) to the discharge end (B), a second tobacco bale (2) is loaded at the charging end (A) and pushing plates (11, 12) of the second pusher are moved counter to the conveying direction past the first pushing plates (4, 5) pushing the first tobacco bale (2) and up to the charging end (A), engage behind the second tobacco bale (2) and push it relative to the base (3) along the conveying section (A, B) to the discharge end (B), while the pushing plates (4, 5) of the first pusher are moved counter to the conveying direction past the pushing plates (11, 12) of the second pusher pushing the second tobacco bale (2) and back to the charging end (A), wherein the slides (6, 13) are moved uniformly parallel and adjacent to one another in each case along a rail pair (7, 8 and/or 14, 15) and the pushing plates (4, 5; 11, 12) associated with the slides (6, 13), in order to engage behind the tobacco bales (2) and in order to adopt a normal position, are moved linearly inwards and outwards.

13. Method according to claim 11 or 12, **characterized in that** the pushing plates (4, 5, 11, 12) are situated in each case in the normal position while they are being moved counter to the conveying direction back to the charging end (A).

14. Method according to one of claims 11 to 13, **characterized in that** the slides (6, 13) are driven and moved individually by means of motors.

## Revendications

1. Dispositif pour le transport de balles de tabac (2) présentant plusieurs bottes de tabac (1), comportant un fond (3) pour la réception des balles de tabac (2), une première coulisse qui est fixée sur un premier chariot (6), le premier chariot (6) étant guidé dans un premier guidage dans le sens de transport de façon à pouvoir se déplacer dans les deux sens, et une deuxième coulisse qui est fixée sur un deuxième chariot (13), le deuxième chariot (13) étant guidé dans un deuxième guidage dans le sens de transport de façon à pouvoir se déplacer dans les deux sens, **caractérisé en ce que** le premier guidage pour le premier chariot (6) est constitué d'une paire de rails (7, 8) et le deuxième guidage pour le deuxième chariot (13), d'une paire de rails (14, 15), et **en ce que** les paires de rails (7, 8 ; 14, 15) sont disposées à distance l'une de l'autre transversalement au sens de transport et **en ce qu'**elles sont disposées en étant adjacentes, parallèles en continu dans le sens de transport, et **en ce que** des plaques coulissantes (4, 5) de la première coulisse et des plaques coulissantes (11, 12) de la deuxième coulisse sont respectivement mobiles autour d'un axe de pivotement (9, 10 et 16, 17) perpendiculaire au sens de transport des chariots (6, 13).

2. Dispositif pour le transport de balles de tabac (2) présentant plusieurs bottes de tabac (1), comportant un fond (3) pour la réception des balles de tabac (2), une première coulisse qui est fixée sur un premier chariot (6), le premier chariot (6) étant guidé dans un premier guidage dans le sens de transport de façon à pouvoir se déplacer dans les deux sens, et une deuxième coulisse qui est fixée sur un deuxième chariot (13), le deuxième chariot (13) étant guidé dans un deuxième guidage dans le sens de transport de façon à pouvoir se déplacer dans les deux sens, **caractérisé en ce que** le premier guidage pour le premier chariot (6) est constitué d'une paire de rails (7, 8) et le deuxième guidage pour le deuxième chariot (13), d'une paire de rails (14, 15) et **en ce que** les paires de rails (7, 8 ; 14, 15) sont disposées à distance l'une de l'autre transversalement au sens de transport et **en ce qu'**elles sont disposées en étant adjacentes, parallèles en continu dans le sens de transport, et **en ce que** des plaques coulissantes (4, 5) de la première coulisse et des plaques coulissantes (11, 12) de la deuxième coulisse sont respectivement fixées sur le chariot respectif (6, 13) de manière à pouvoir entrer et sortir de façon translatoire.

3. Dispositif selon la revendication 1 ou 2, **caractérisé en ce qu'**au moins une plaque coulissante (4, 5, 11, 12) est réalisée de façon à pouvoir se déplacer dans les deux sens d'une position de repos à une position de travail.

4. Dispositif selon l'une des revendications 1 à 3, **caractérisé en ce que** le premier guidage et le deuxième guidage sont disposés sur ou sous le fond (3).

5. Dispositif selon l'une des revendications 1 à 4, **caractérisé en ce que** le premier guidage (7, 8) et le deuxième guidage (14, 15) sont disposés dans un plan commun sur ou sous le fond (3).

6. Dispositif selon l'une des revendications 1 à 3, **caractérisé en ce que** le premier guidage est disposé sur le fond (3) et le deuxième guidage sous le fond (3).

7. Dispositif selon la revendication 1, **caractérisé en ce que** l'axe de pivotement (9, 10) de la première coulisse et l'axe de pivotement (16, 17) de la deuxième coulisse sont disposés selon un alignement dans le sens de transport et **en ce que** chaque plaque coulissante (4, 5, 11, 12) présente un évidement (21, 22) qui correspond, à peu près, de façon privilégiée à 100 à 250 %, de façon particulièrement privilégiée à 120 à 200 %, de la surface de la section transversale de l'autre plaque coulissante respective (4, 5, 11, 12) en position de repos.

8. Dispositif selon la revendication 1 ou 7, **caractérisé en ce que** la distance entre les axes de pivotement (9, 10) des premières plaques coulissantes (4, 5) est plus petite transversalement au sens de transport que la distance entre les axes de pivotement (16, 17) des deuxièmes plaques coulissantes (11, 12).

9. Dispositif selon l'une des revendications 1 à 8, **caractérisé en ce que** le fond (3) est réalisé par une bande transporteuse.

10. Dispositif selon l'une des revendications 1 à 9, **caractérisé en ce que** le fond (3) est disposé en remontant dans le sens de transport, de façon privilégiée avec une pente de 1 à 20 degrés, de façon particulièrement privilégiée de 3 à 15 degrés.

11. Procédé pour le transport de deux balles de tabac (2) successives présentant plusieurs bottes de tabac (1), le long d'un parcours de transport (A, B) avec une extrémité d'alimentation (A) et une extrémité de déchargement (B), dans lequel les balles de tabac (2) sont chargées l'une après l'autre à l'extrémité d'alimentation (A) du parcours de transport (A, B) sur un fond (3) s'étendant le long du parcours de transport (A, B) et sont transportées de l'extrémité d'alimentation (A) vers l'extrémité de déchargement (B) du parcours de transport (A, B), les balles de tabac (2) étant déplacées à l'aide d'une première coulisse qui est fixée sur un premier chariot (6), et d'une deuxième coulisse qui est fixée sur un deuxième chariot (13), et les chariots (6, 13) étant guidés dans des premier et deuxième guidages correspondants, **caractérisé en ce qu'**une première balle de tabac (2) est chargée à l'extrémité d'alimentation (A), **en ce que** des plaques coulissantes (4, 5) de la première coulisse sont déplacées vers l'extrémité d'alimentation (A), saisissent la première balle de tabac (2) par derrière et les font glisser par rapport au fond (3) le long du parcours de transport (A, B) jusqu'à l'extrémité de déchargement (B), **en ce qu'**une deuxième balle de tabac (2) est chargée à l'extrémité d'alimentation (A) et **en ce que** des plaques coulissantes (11, 12) de la deuxième coulisse sont déplacées vers l'extrémité d'alimentation (A), dans le sens inverse du sens de transport, en passant devant les première plaques coulissantes (4, 5) poussant la première balle de tabac (2), saisissent la deuxième balle de tabac (2) par derrière et les font glisser par rapport au fond (3) le long du parcours de transport (A, B) jusqu'à l'extrémité de déchargement (B), tandis que les plaques coulissantes (4, 5) de la première coulisse sont redéplacées vers l'extrémité d'alimentation (A) dans le sens inverse du sens de transport en passant devant les plaques coulissantes (11, 12), de la deuxième coulisse, poussant la deuxième balle de tabac (2), les chariots (6, 13) étant respectivement déplacés, de façon adjacente, parallèle en continu, le long d'une paire de rails (7, 8 et 14, 15) et les plaques coulissantes (4, 5 ; 11, 12) affectées aux chariots (6, 13) étant engagées et sorties en pivotant autour des axes de pivotement (9, 10 et 16, 17) verticaux pour la saisie par derrière des balles de tabac (2) et pour l'occupation d'une position de repos.

12. Procédé pour le transport de deux balles de tabac (2) successives présentant plusieurs bottes de tabac (1), le long d'un parcours de transport (A, B) avec une extrémité d'alimentation (A) et une extrémité de déchargement (B), dans lequel les balles de tabac (2) sont chargées l'une après l'autre à l'extrémité d'alimentation (A) du parcours de transport (A, B) sur un fond (3) s'étendant le long du parcours de transport (A, B) et sont transportées de l'extrémité d'alimentation (A) vers l'extrémité de déchargement (B) du parcours de transport (A, B), les balles de tabac (2) étant déplacées à l'aide d'une première coulisse qui est fixée sur un premier chariot (6), et d'une deuxième coulisse qui est fixée sur un deuxième chariot (13), et les chariots (6, 13) étant guidés dans des premier et deuxième guidages correspondants, **caractérisé en ce qu'**une première balle de tabac (2) est chargée à l'extrémité d'alimentation (A), **en ce que** des plaques coulissantes (4, 5) de la première coulisse sont déplacées vers l'extrémité d'alimentation (A), saisissent la première balle de tabac (2) par derrière et les font glisser par rapport au fond (3) le long du parcours de transport (A, B) jusqu'à l'extrémité de déchargement (B), **en ce qu'**une deuxième balle de tabac (2) est chargée à l'extrémité d'alimentation (A) et **en ce que** des plaques coulissantes (11, 12) de la deuxième coulisse sont déplacées vers l'extrémité d'alimentation (A) dans le sens inverse du sens de transport en passant devant les première plaques coulissantes (4, 5) poussant la première balle de tabac (2), saisissent la deuxième balle de tabac (2) par derrière et les font glisser par rapport au fond (3) le long du parcours de transport (A, B) jusqu'à l'extrémité de déchargement (B), tandis que les plaques coulissantes (4, 5) de la première coulisse sont redéplacées vers l'extrémité d'alimentation (A) dans le sens inverse du sens de transport en passant devant les plaques coulissantes (11, 12), de la deuxième coulisse, poussant la deuxième balle de tabac (2), les chariots (6, 13) étant respectivement déplacés, de façon adjacente, parallèle en continu, le long d'une paire de rails (7, 8 et 14, 15) et les plaques coulissantes (4, 5 ; 11, 12) affectées aux chariots (6, 13) étant déplacées vers l'intérieur et vers l'extérieur de façon translatoire pour la saisie par derrière des balles de tabac (2) et pour l'occupation d'une position de repos.

13. Procédé selon la revendication 11 ou 12, **caractérisé en ce que** les plaques coulissantes (4, 5, 11, 12) sont respectivement en position de repos pendant qu'elles sont redéplacées vers l'extrémité d'alimentation (A) dans le sens inverse de transport.

14. Procédé selon l'une des revendications 11 à 13, **caractérisé en ce que** les chariots (6, 13) sont entraînés et déplacés isolément à l'aide de moteurs.
